# EUROPÄISCHE PATENTSCHRIFT

(11) **EP 1 091 141 B1**
(45) Veröffentlichungstag und Bekanntmachung des Hinweises auf die Patenterteilung: **21.04.2004**
(21) Anmeldenummer: 00117783.1
(22) Anmeldetag: 18.08.2000
(51) Int. Cl.: F16F 9/46

(54) **Schwingungsdämpfer**
Vibration damper
Amortisseur de vibrations

(30) Priorität: 05.10.1999 DE 19947769
(43) Veröffentlichungstag der Anmeldung: 11.04.2001
(73) Patentinhaber: ZF Sachs AG, 97424 Schweinfurt (DE)
(72) Erfinder: Tantius, Andreas, 53842 Troisdorf (DE)

(56) Entgegenhaltungen:
- DE-C- 4 233 650
- DE-C- 4 438 384
- US-A- 4 900 056
- PATENT ABSTRACTS OF JAPAN vol. 014, no. 033 (M-923), 22. Januar 1990 (1990-01-22) & JP 01 269742 A (TOKICO LTD), 27. Oktober 1989 (1989-10-27)

## Beschreibung

Die Erfindung bezieht sich auf einen Schwingungsdämpfer mit mindestens einem Zylinderrohr, einer Kolbenstange und einer aus der Kolbenstange herausgeführten elektrischen Leitung, wobei der Endbereich der Kolbenstange in einem Stützlager aufgenommen und über eine Verschraubung im Stützlager fixiert ist.

Es sind bereits hydraulische Schwingungsdämpfer bekannt (z.B. DE 197 37 935 C1), bei denen aus der hohlen Kolbenstange eine elektrische Zuleitung über ein Anschlußlager nach außen geführt wird. Bei der Montage eines derartigen Schwingungsdämpfers wird in der letzten Phase der Montage die Zuleitung durch die hohle Kolbenstange in den Schwingungsdämpfer eingeführt. Danach wird die Zuleitung durch die radiale Zugangsöffnung aus dem Anschlußlager hinausgebracht, um anschließend dieses Anschlußlager auf die Kolbenstange aufschrauben zu können. Bei der Schraubbewegung des Anschlußlagers wird die Zuleitung unter Umständen verdrillt, so daß die dabei auftretende Belastung auf die Kontakte zum Schwingungsdämpfer übertragen werden kann. Dabei kann nicht ausgeschlossen werden, daß sich ein Kontakt löst und die bestimmungsgemäße Funktion nicht mehr gewährleistet ist.

Darüber hinaus sind Ausführungen bekannt (z.B. DE 42 33 650 C1), bei denen zwar ein Knick in der Zuleitung entschärft ist, nachteilig ist dabei jedoch, daß in einen Teil des Umfanges des Anschlußlagers die Leitung einzufädeln ist.

Werden Kolbenstangen mit einer Gewindeverbindung verwendet, so besteht das Problem darin, daß ein serienmäßiger Anschlußstecker nicht ohne weiteres durch die im Federbeinstützlager verwendete Anschlußmutter hindurchpaßt.

Aufgabe der Erfindung ist es, einen Schwingungsdämpfer mit einem Gewinde in der Kolbenstange derart in einem Federbeinstützlager aufzunehmen, daß auch eine elektrische, in den Hohlraum der Kolbenstange führende Zuleitung ohne große Probleme montierbar ist.

Diese Aufgabe wird erfindungsgemäß dadurch gelöst, daß die Verschraubung aus einem am Stützlager anliegenden, mit einer konischen Innenfläche versehenen Ring und einer mit einem Innengewinde an der Kolbenstange befestigten und in Axialrichtung geschlitzten Mutter besteht, wobei die Mutter mit einer konischen Außenfläche in die konische Innenfläche des Ringes eingreift.

Hierbei ist von Vorteil, daß der Schwingungsdämpfer in seiner Aufnahme montiert werden kann, wobei zur Befestigung der Kolbenstange die elektrische Zuleitung durch die Mutter einfädelbar ist. Es lassen sich somit beliebige serienmäßige Stecker verwenden, ohne auf den lichten Durchmesser der Mutter Rücksicht nehmen zu müssen.

Nach einem weiteren wichtigen Merkmal ist vorgesehen, daß die Leitung mit einem Stecker versehen ist. Vorteilhaft ist hierbei, daß im Handel übliche Stekker oder im Fahrzeug bereits verwendete kompatible Stecker Verwendung finden können.

Nach einer weiteren Ausgestaltung ist vorgesehen, daß die Leitung im Stützlager eine Klemmverbindung aufweist. Mit Vorteil wird hierbei das Stützlager zur Sicherung der elektrischen Leitung herangezogen. Die elektrische Leitung ist dabei derart am Stützlager fixiert, daß eine Zugsicherung entsteht.

Nach einem weiteren wichtigen Merkmal ist vorgesehen, daß die Mutter in Axialrichtung außer der konischen Außenfläche mit einer Schlüsselfläche versehen ist.

Es ist desweiteren vorgesehen, daß die Leitung abgedichtet aus der Kolbenstange heraustritt. Hierbei ist von Vorteil, daß die im Schwingungsdämpfer anzuschließenden Elemente gegen äußere Einflüsse und Spritzwasser geschützt werden, ohne daß weitere zusätzliche Maßnahmen notwendig sind.

Bevorzugte Ausführungsbeispiele der Erfindung sind in den Figuren schematisch dargestellt.

Es zeigt:
Figur 1 einen Schwingungsdämpfer in Ansicht und ein Federbeinstützlager im Schnitt
Figur 2 einen Schnitt durch die Zugsicherung im Bereich des Federbeinstützlagers
Figur 3 eine Draufsicht auf die Mutter im montierten Zustand im Ring, teils geschnitten.

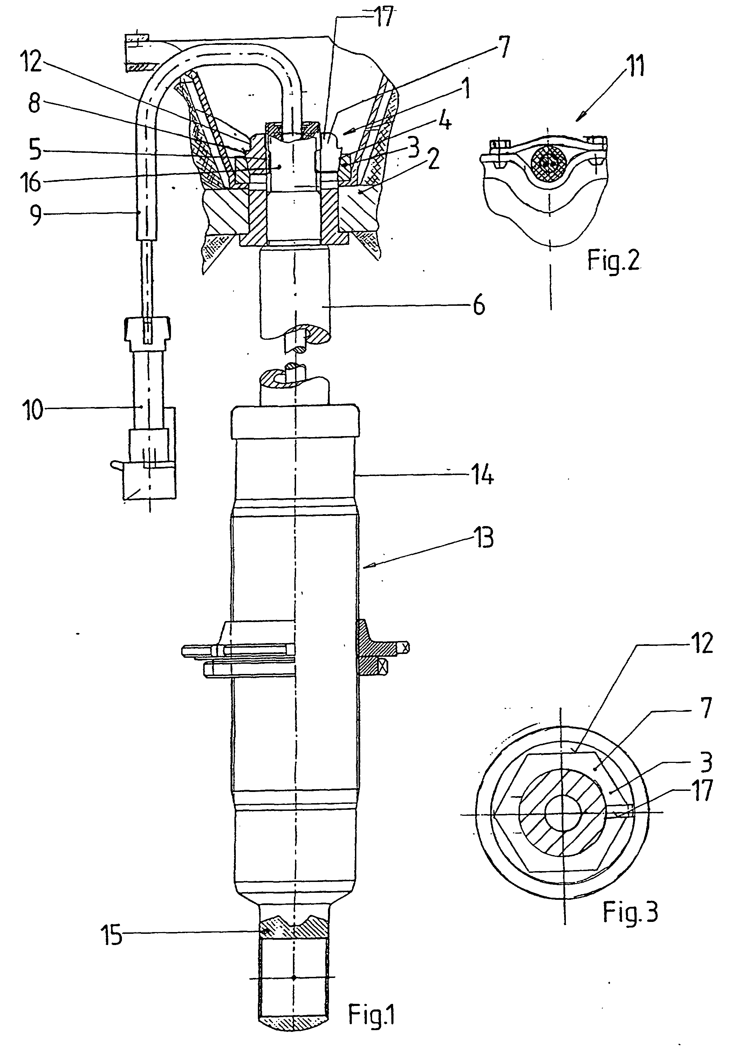

Der in Figur 1 dargestellte Schwingungsdämpfer 13 zeigt ein äußeres Behälterrohr 14 sowie ein unteres Befestigungsauge 15. Aus dem Behälterrohr 14 ist die Kolbenstange 6 abgedichtet nach außen herausgeführt, wobei der Befestigungsstift zur Befestigung in einem an der Karosserie eines Fahrzeuges vorgesehenen Stützlagers 2 vorgesehen ist. Das Stützlager 2 dient der Aufnahme des Schwingungsdämpfers 13 und kann zusätzlich noch mit Gummielementen (nicht dargestellt) zur Abkopplung von Schwingungen versehen werden. Aus der Kolbenstange 6 ist eine elektrische Leitung 9 herausgeführt, die innerhalb des Schwingungsdämpfers 13 zur Verbindung mit einem Elektromagnet oder einem Stellmotor herangezogen wird, während auf der entgegengesetzten Seite der elektrischen Leitung ein Stecker 10 zur Verbindung mit einem Gegenstecker des Fahrzeuges herangezogen werden kann.

Der Befestigungsstift 16 verwendet eine Verschraubung 1 um mit dem Stützlager 2 eine feste Verbindung herzustellen. Die Verschraubung 1 besteht dabei aus einem Ring 3 mit einer konischen Innenfläche 4 sowie einer Mutter 7 mit einer entsprechenden konischen Außenfläche 8. Über das Innengewinde 5 der Mutter 7 erfolgt die Verbindung mit dem Befestigungsstift 16, indem über die Schlüsselfläche 12 die Mutter 7 einerseits auf dem Gewinde des Befestigungsstiftes 16 der Kolbenstange 6 axial bewegt wird. Bei dieser axialen Bewegung der Mutter 7 kommt die konische Innenfläche des Ringes 3 mit der konischen Außenfläche 8 der Mutter 7 in eine kraftschlüssige Verbindung.

Diese Flächen sind deshalb nötig, da die Mutter 7 über eine Ausnehmung 17 axial geschlitzt ist, um vor der Befestigung des Schwingungsdämpfers 13 die Leitung 9 durch die Ausnehmung 17 zu führen. Die konische Innenfläche 4 sowie die konische Außenfläche 8 verhindern dabei, daß beim Festziehen der Mutter 7 keine Aufspreitzung sondern eine feste Verbindung entsteht.

Aus der Figur 2 ist eine Klemmverbindung 11 zu entnehmen, durch die die elektrische Leitung 9 in geeigneter Weise fixiert werden kann, um somit als Zugsicherung zu dienen.

Die Figur 3 zeigt in Draufsicht die Mutter 7 mit ihrer Ausnehmung 17 sowie den Ring 3 in den die Mutter 7 eingreift. Über die Schlüsselflächen 12 kann mit einem entsprechenden Werkzeug die Befestigung erfolgen.

### Bezugszeichenliste

- 1 -: Verschraubung
- 2 -: Stützlager
- 3 -: Ring
- 4 -: konische Innenfläche
- 5 -: Innengewinde
- 6 -: Kolbenstange
- 7 -: Mutter
- 8 -: konische Außenfläche
- 9 -: Leitung
- 10 -: Stecker
- 11 -: Klemmverbindung
- 12 -: Schlüsselfläche
- 13 -: Schwingungsdämpfer
- 14 -: Behälterrohr
- 15 -: Befestigungsauge
- 16 -: Befestigungsstift
- 17 -: Ausnehmung

## Patentansprüche

1. Schwingungsdämpfer mit mindestens einem Zylinderrohr (14), einer Kolbenstange (6) und einer aus der Kolbenstange (6) herausgeführten elektrischen Leitung (9), wobei der Endbereich der Kolbenstange (6) in einem Stützlager (2) aufgenommen und über eine Verschraubung (1) im Stützlager (2) fixiert ist,
**dadurch gekennzeichnet,**
**daß** die Verschraubung (1) aus einem am Stützlager (2) anliegenden, mit einer konischen Innenfläche (4) versehenen Ring (3) und einer mit einem Innengewinde (5) an der Kolbenstange (6) befestigten und in Axialrichtung geschlitzten Mutter (7) besteht, wobei die Mutter (7) mit einer konischen Außenfläche (8) in die konische Innenfläche (4) des Ringes (3) eingreift.

2. Schwingungsdämpfer nach Anspruch 1,
**dadurch gekennzeichnet,**
**daß** die Leitung (9) mit einem Stecker (10) versehen ist.

3. Schwingungsdämpfer nach Anspruch 1,
**dadurch gekennzeichnet,**
**daß** die Leitung (9) im Stützlager eine Klemmverbindung (11) aufweist.

4. Schwingungsdämpfer nach Anspruch 1,
**dadurch gekennzeichnet,**
**daß** die Mutter (7) in Axialrichtung außer der konischen Außenfläche (8) mit einer Schlüsselfläche (12) versehen ist.

5. Schwingungsdämpfer nach Anspruch 1,
**dadurch gekennzeichnet,**
**daß** die Leitung (9) abgedichtet aus der Kolbenstange (6) heraustritt.

## Claims

1. Vibration damper, with at least one cylindrical tube (14), with a piston rod (6) and with.an electrical line (9) led out of the piston rod (6), the end region of the piston rod (6) being received in a supporting bearing (2) and being fixed in the supporting bearing (2) via a screw connection (1), **characterized in that** the screw connection (1) consists of a ring (3) bearing against the supporting bearing (2) and provided with a conical inner face (4) and of a nut (7) fastened to the piston rod (6) by means of an internal thread (5) and slotted in the axial direction, the nut (7) engaging with a conical outer face (8) into the conical inner face (4) of the ring (3).

2. Vibration damper according to Claim 1, **characterized in that** the line (9) is provided with a plug (10).

3. Vibration damper according to Claim 1, **characterized in that** the line (9) has a clamping connection (11) in the supporting bearing.

4. Vibration damper according to Claim 1, **characterized in that** the nut (7) is provided in the axial direction with a key face (12) in addition to the conical outer face (8).

5. Vibration damper according to Claim 1, **characterized in that** the line (9) emerges, sealed off, from the piston rod (6).

## Revendications

1. Amortisseur de vibrations, comprenant au moins un tube cylindrique (14), une tige de piston (6) et une conduite électrique (9) qui débouche hors de la tige de piston (6), du type selon lequel la zone terminale de la tige de piston (6) est logée dans une crapaudine (2) et est fixée dans la crapaudine (2) par l'intermédiaire d'un assemblage par vissage (1), **caractérisé en ce que** l'assemblage par vissage (1) se compose d'une bague (3) pourvue d'une portée intérieure conique (4), reposant sur la crapaudine (2) et d'un écrou (7), fendu axialement et fixé par un filetage intérieur (5) à la tige de piston (6), l'écrou (7) venant en prise par une portée extérieure conique (8) dans la portée intérieure conique (4) de la bague (3).

2. Amortisseur de vibrations selon la revendication 1, **caractérisé en ce que** la conduite (9) est munie d'une prise (10).

3. Amortisseur de vibrations selon la revendication 1, **caractérisé en ce que** la conduite (9) présente une liaison par serrage (11) dans la crapaudine.

4. Amortisseur de vibrations selon la revendication 1, **caractérisé en ce que** l'écrou (7) est muni axialement, à l'extérieur de la portée extérieure conique (8), d'une portée de verrouillage (12).

5. Amortisseur de vibrations selon la revendication 1, **caractérisé en ce que** la conduite (9) débouche hors de la tige de piston (6) de manière étanche.
